# EUROPEAN PATENT SPECIFICATION

(11) **EP 2 387 088 B1**
(45) Date of publication and mention of the grant of the patent: **02.12.2015**
(21) Application number: 11250033.5
(22) Date of filing: 13.01.2011
(51) Int. Cl.: H01M 2/22, H01M 2/26

(54) **Battery pack**
Batteriepack
Bloc-batteries

(30) Priority: 14.05.2010 US 345036; 30.07.2010 US 848059
(43) Date of publication of application: 16.11.2011
(73) Proprietor: Samsung SDI Co., Ltd., Yongin-si, Gyeonggi-do (KR)
(72) Inventor: Lee, Seong-Joon, Gyeonggi-do (KR); Lee, Myung-Jun, Yongin-si Gyeonggi-do (KR)
(74) Representative: Mounteney, Simon James

(56) References cited:
- EP-A1- 1 804 328
- EP-A2- 2 077 595
- WO-A1-2009/011470
- US-A1- 2006 093 897

## Description

### BACKGROUND

### 1. Field

The present invention relates to a battery assembly for use in a secondary battery.

### 2. Description of the Related Art

A protection circuit is generally mounted in a secondary battery in order to prevent the battery from being excessively charged or discharged. The protection circuit of the battery is generally embodied as a hard printed circuit board (PCB). The hard PCB embodying the protection circuit is connected to an external control circuit module or a terminal of a battery module using wires.

Wires or terminals are connected to the hard PCB using a soldering method. However, heat generated during such a soldering operation can cause thermal damage to a circuit device disposed on the hard PCB. Furthermore, it can be difficult to connect the hard PCB and wires using the soldering method, and this can cause many defective products.

Ahn et al. (WO2009/011470) discloses a battery pack comprising a protection circuit module (PCM), which is connected to a battery cell via conductive nickel plates by welding or soldering.

Lee et al. (EP2077595) discloses a protective circuit board comprising a first terminal and a second terminal, which is bent at an angle with respect to the first terminal. A battery pack comprising said protective circuit board connected to an electrode assembly via electrode tabs is also disclosed.

### SUMMARY

The present invention sets out to provide a battery pack that maximizes the use of an inner space of a protection circuit module (PCM) and has an electrical connection that can be easily formed between an electrode tab and the PCM.

Additional aspects will be set forth in part in the description which follows and, in part, will be apparent from the description, or may be learned by practice of the presented embodiments.

According to an aspect of the present invention, there is provided a battery assembly comprising a battery cell, a protection circuit module and a connection block. The battery cell comprises an electric tab, which is electrically coupled to the protection circuit module via the connection block. The protection circuit module comprises a substrate and a plurality of protection circuits and the substrate comprises a plurality of grooves on one side surface of the substrate, which expose a metal layer of the protection circuits mounted in the substrate and the connection blocks are electrically connected to the protection circuits mounted in the substrate through the grooves. Preferred features of the invention are set out in Claims 2 to 15.

Embodiments of the present invention thus use a connection block to enable a welding operation for connecting an electrode tab and a protection circuit module (PCM) to be easily performed. Furthermore, thermal damage to other elements, such as a substrate, a protection circuit, or a device may be reduced.

The connection block may be fixed to one side surface of the substrate, and a connection terminal formed via the connection block to electrically connect the electrode tab and the PCM to each other. In such a case there is no damage to the inner space of the PCM, so the inner space of the PCM remains unchanged. This increases the utility of space in such a way that other parts may be mounted in the battery pack, and facilitate minimisation of the battery pack.

### BRIEF DESCRIPTION OF THE DRAWINGS

These and/or other aspects of the invention will become apparent and more readily appreciated following a review of the description of the embodiments, taken in conjunction with the accompanying drawings of which:
FIG. 1 is a schematic perspective view of an assembling structure of a battery pack according to an embodiment of the present invention;
FIG. 2 is a schematic exploded perspective view of an assembling state of a protection circuit module (PCM) and a plurality of connection blocks of FIG. 1 according to an embodiment of the present invention;
FIG. 3 is a schematic exploded perspective view of an assembling state of the PCM and the plurality of connection blocks of FIG. 1 according to another embodiment of the present invention;
FIG. 4 is a perspective view of the battery pack assembled with the PCM of FIG. 1;
FIG. 5 is a cross-sectional view of the battery pack and the PCM of FIG. 4 taken along a line V-V;
FIG. 6 is a schematic perspective view of an assembling structure of a battery pack according to another embodiment of the present invention;
FIG. 7 is a schematic exploded perspective view of an assembling state of a PCM, a plurality of connection blocks, and a connection terminal of FIG. 6 according to an embodiment of the present invention;
FIG. 8 is a perspective view of the battery pack assembled with the PCM of FIG. 7;
FIG. 9 is a cross-sectional view of the battery pack and PCM of FIG.8 taken along a line IX-IX;
FIGS. 10 through 12 are cross-sectional views for explaining a process of assembling the battery pack of FIG. 9; and
FIG. 13 is a cross-sectional view of the battery pack of FIG. 9 according to another embodiment of the present invention.

### DETAILED DESCRIPTION

Hereinafter, the inventive concept will be described more fully with reference to the accompanying drawings, in which embodiments of the invention are shown. The inventive concept may, however, be embodied in many different forms and should not be construed as limited to the exemplary embodiments set forth herein. Rather, these embodiments are provided so that this disclosure will be thorough and complete, and will fully convey the scope of the invention to those of ordinary skilled in the art. The terminology used herein is for the purpose of describing particular embodiments only and is not intended to be limiting of the inventive concept. As used herein, the singular forms 'a', 'an', and 'the' are intended to include the plural forms as well, unless the context clearly indicates otherwise. It will be further understood that the terms "comprises' and/or 'comprising,' when used in this specification, specify the presence of stated features, integers, operations, elements, and/or components, but do not preclude the presence or addition of one or more other features, integers, operations, elements, components, and/or groups thereof. It will be understood that, although the terms 'first', 'second', 'third', etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the inventive concept.

### (First Embodiment)

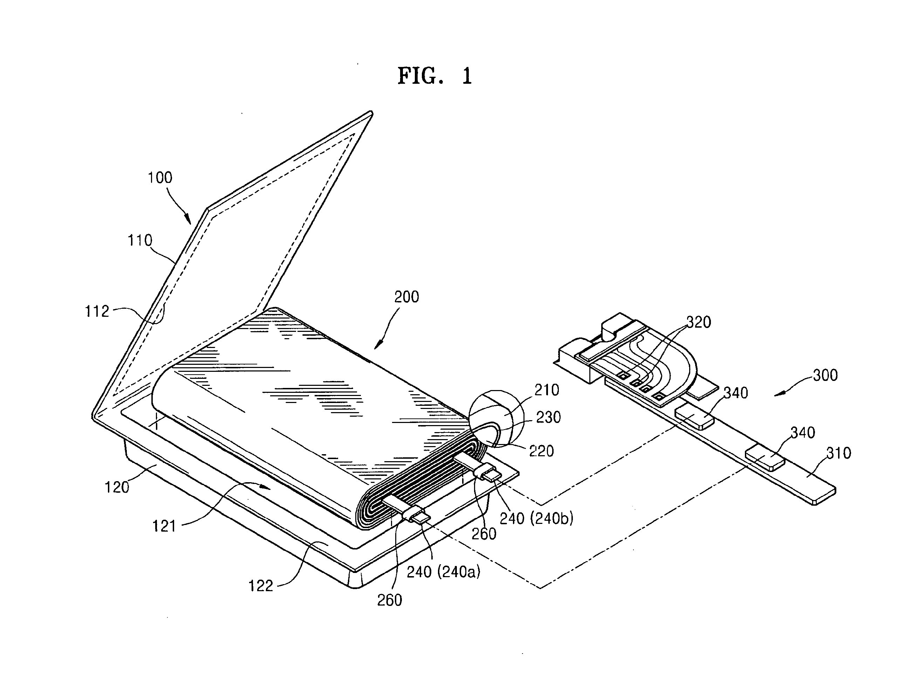

FIG. 1 is a schematic perspective view of an assembly structure of a battery pack according to an embodiment of the present invention. Referring to FIG. 1, the battery pack includes a battery cell including an electrode assembly 200 and a cover 100 accommodating the electrode assembly 200, and a protection circuit module (PCM) 300.

The cover 100 includes a lower cover 120 for accommodating the electrode assembly 200 and an upper cover 110 for sealing the electrode assembly 200. An accommodating portion 121 for accommodating the electrode assembly 200 is formed in the lower cover 120 using, for example, a press processing method. Edges of the lower cover 120 and the upper cover 110 are integrally bonded to each other. To this end, a lower sealing portion 122 is formed in the edge of the lower cover 120, and an upper sealing portion 112 is formed in the edge of the upper cover 110. The upper sealing portion 112 and the lower sealing portion 122 are bonded to each other using a thermal welding method.

The electrode assembly 200 is manufactured by laminating a positive electrode plate 210 on which a positive slurry including a positive electrode active material is coated, a negative electrode plate 220 on which a negative slurry including a negative electrode active material is coated, and a separator 230 disposed between the positive electrode plate 210 and the negative electrode plate 220, forming a laminate, and coiling the laminate. The separator 230 is disposed between the positive electrode plate 210 and the negative electrode plate 220 to prevent an electrical short therebetween.

The positive electrode plate 210 includes a positive electrode active material layer in which the positive electrode slurry is coated on a positive electrode current collector formed of, for example, aluminium, and a positive electrode plain portion in which the positive electrode slurry is not coated on the positive electrode current collector. The positive electrode slurry includes the positive electrode active material. The positive electrode active material may use, for example, a lithium-containing transition metal oxide such as LiCoO₂, LiNiO₂, LiMnO₂, or LiMnO₄ or a lithium chalcogenide compound. Meanwhile, the positive electrode plain portion is bonded to a positive electrode tab 240a of a predetermined length. A part of the positive electrode tab 240a externally protrudes out from the cover.

The negative electrode plate 220 includes a negative electrode active material layer in which the negative electrode slurry is coated on a negative electrode current collector formed of, for example, nickel, and a negative electrode plain portion in which the negative electrode slurry is not coated on the negative electrode current collector. The negative electrode slurry includes the negative electrode active material. The negative electrode active material may use, for example, a carbon material such as crystalline carbon, amorphous carbon, carbon complex, or a carbon fiber, a lithium metal, or a lithium alloy. Meanwhile, the negative electrode plain portion is bonded to a negative electrode tab 240b of a predetermined length. A part of the negative electrode tab 240b externally protrudes out from the cover 100.

The battery cell may be a polymer cell in which at least one of the positive electrode, the negative electrode, and an electrolyte is formed of a polymer. The polymer cell uses a polymer electrolyte, the separator 230 may function as an ion conductivity medium, i.e., as the electrolyte, in addition to functioning to separate the electrodes. The polymer electrolyte may be a gel or solid polymer electrolyte. The polymer electrolyte may use, for example, PEO: poly(ethylene oxide), PAN: poly(acrylonitrile), PMMA: poly(methylmethacrylate), PDVF: poly(vinylidene fluoride), or the like. The gel or solid polymer electrolyte may secure reliability since the electrolyte is not externally exposed out of the cover 100. Meanwhile, if the positive electrode is formed of a polymer, an energy density of the battery cell may increase. The positive electrode may be a conductive polymer. The conductive polymer may use, for example, Polyaniline, Polyacetylene, Polythiophene, Poly(thienylene vinylene), Poly(p-phenylene vinylene), Polypyrrole, or the like.

The positive electrode tap 240a and the negative electrode tap 240b are electrically connected to the PCM 300. The electrode tabs 240 partially protrude from the cover 100 as shown in FIG. 1. In this case, in order to improve a seal between the cover 100 and the electrode tabs 240, an adhesive tab tape 260 is disposed on portions where the upper sealing portion 112 and the lower sealing portion 122 overlap and wrap around the positive electrode tab 240a and the negative electrode tab 240b.

Although one pair of electrode tabs 240 in the form of the positive electrode tab 240a and the negative electrode tab 240b is provided in the present embodiment, the present invention is not limited thereto. For example, a plurality of pairs of electrode tabs 240 may be formed. In this case, the PCM 300 includes a plurality of connection blocks 340 in numbers equal to the number of the positive electrode tabs 240a and the negative electrode tabs 240b of the plurality of pairs of electrode tabs 240.

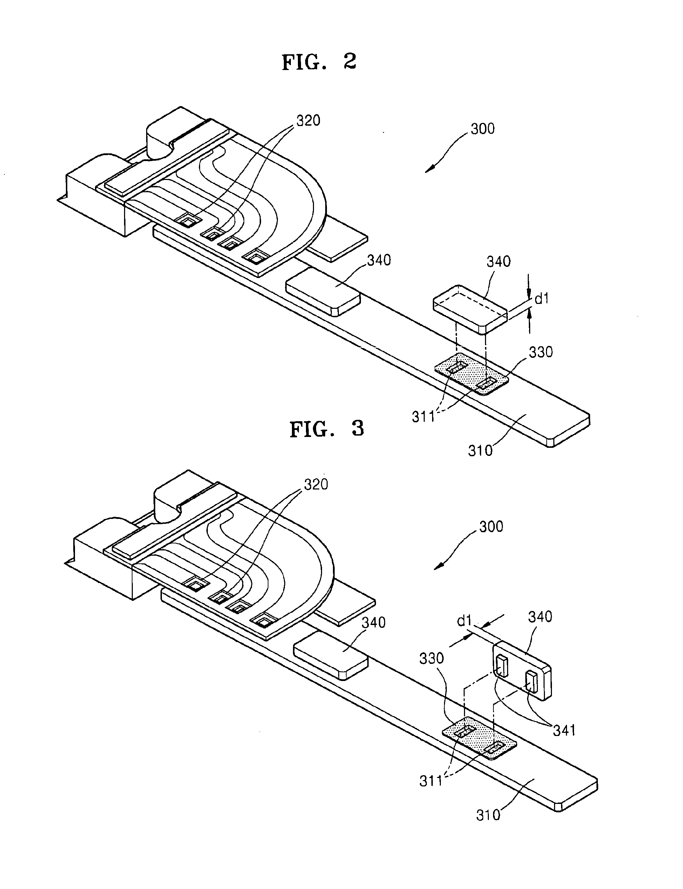

FIG. 2 is a schematic exploded perspective view of an assembling state of the PCM 300 and the connection blocks 340 of FIG. 1 according to an embodiment of the present invention.

Referring to FIG. 2, the PCM 300 includes a substrate 310 and a plurality of protection circuits. The protection circuits are for preventing a battery cell from overheating or exploding due to an excessive charge, discharge, or current of the battery cell and may be mounted in the substrate 310. The substrate 310 may be formed of an electrically insulating material. For example, the substrate 310 may be formed of an electrically insulation material that is flexible, such as PET: Poly Ethylene Terephthalate and PI: Polyimide. A load terminal 320 is electrically connected to an external load (not shown).

The connection blocks 340 are disposed on one side surface of the substrate 310. The connection bocks 340 are used to electrically connect the electrode tabs 240 and the PCM 300, and are disposed at locations corresponding to the electrode tabs 240. The connection blocks 340 may be formed of an electrically conductive material. For example, the connection blocks 340 may be formed of nickel in view of an (desired) electrical conductivity. Alternatively the connection blocks 340 may be formed of copper plated with nickel.

A process of fixing the connection blocks 340 to the substrate 310 will now be described below. A plurality of grooves 311 are formed on one side surface of the substrate 310 in order to expose a metal layer of the protection circuits mounted in the substrate 310. A welding material 330 is applied on an upper portion of the substrate 310 on which the metal layer is exposed. The connection blocks 340 are disposed on the welding material 330, and are sintered thereto. Thus, the connection blocks 340 are fixed to the substrate 310. The welding material 330 may use, for example, a soldering cream. Meanwhile, the connection blocks 340 may be electrically connected to the protection circuits mounted in the substrate 310 through the grooves 311.

The connection blocks 340 are fixed to one side surface of the substrate 310 as described above, and thus it is unnecessary to form an additional insertion hole in the substrate 310 in order to fix the connection blocks 340. This results in an increase in a suitable space on the substrate 310 for mounting protection circuits or other devices. As space utilization increases a thin battery pack may be manufactured.

Thicknesses d1 of the connection blocks 340 may be from about 0.3 mm to about 1.2 mm. If the thicknesses d1 of the connection blocks 340 are under 0.3 mm, the PCM 300 may be damaged in fixing the connection blocks 340 to the substrate 310. For example, the protection circuits may be damaged in applying the soldering cream on the substrate 310 and sintering the connection blocks 340 thereto. Meanwhile, if the thicknesses d1 of the connection blocks 340 exceeds 1.2 mm, the connection blocks 340 may not be freely assemble to other devices. For example, if the battery pack is installed in a small device such as a mobile phone, the thicknesses d1 of the connection blocks 340 may not exceed the 1.2 mm in view of the sizes of the small device and the battery pack.

The connection blocks 340 are partially buried in the PCM 300. In the present embodiment with reference to FIG. 2, when the welding material 300 is applied and sintered, the connection blocks 340 are partially melted and filled into the grooves 311, and thus the connection blocks 340 may be partially buried in the PCM 300.

According to another embodiment of the present invention, a plurality of burying portions 341 that are to be buried in the PCM 300 may be additionally formed in one side surface of the connection blocks 340. Referring to FIG. 3, the burying portions 341 are formed in locations corresponding to the grooves 311 in one side surface of the connection blocks 340 and are buried in the PCM 300. In the present embodiment, the connection blocks 340 and the PCM 300 are coupled to each other by applying the welding material 330 on the substrate 300 and sintering the connection blocks 340 thereto.

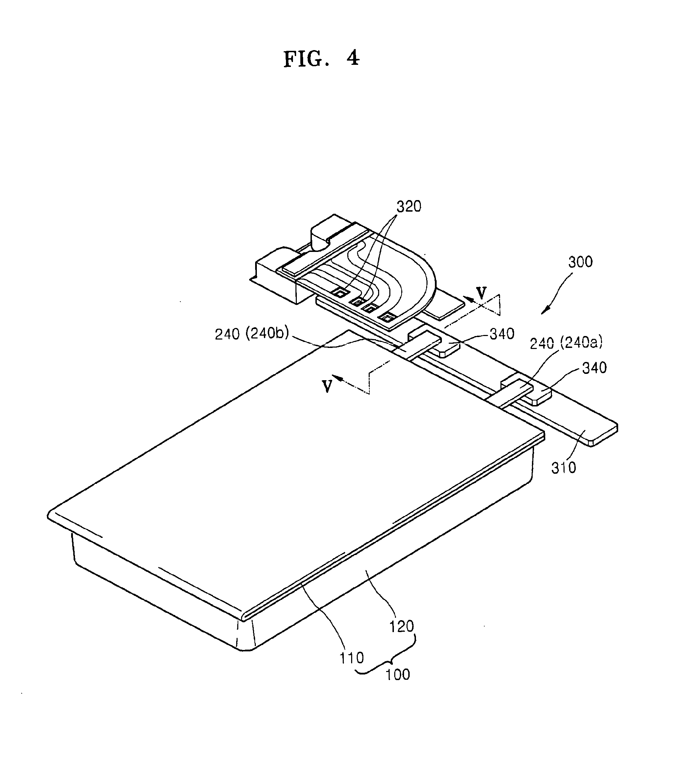

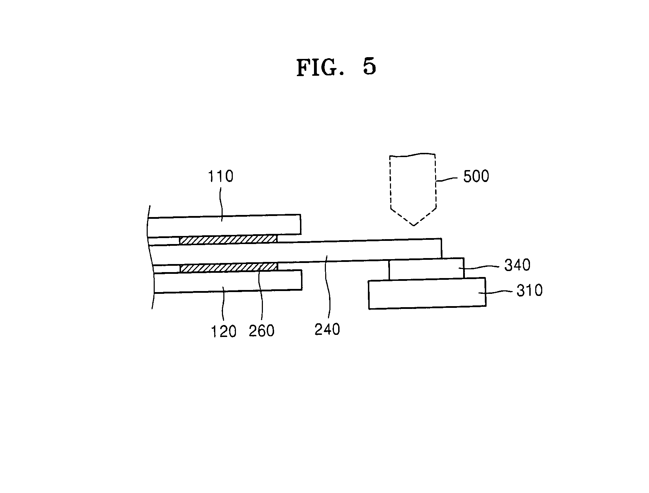

FIG. 4 is a perspective view of the battery pack assembled with the PCM 300 of FIG. 1. FIG. 5 is a cross-sectional view of the battery pack of FIG. 4 taken along a line V-V.

The electrode tabs 240 are electrically connected to the connection blocks 340. For example, the electrode tabs 240 are electrically connected to the connection blocks 340 by contacting one side surface of the electrode tabs 240 and the connection blocks 340. In this regard, the electrode tabs 240 and the connection blocks 340 are welded to each other in order to reliably maintain a contact state between the electrode tabs 240 and the connection blocks 340. A laser welding method may be used in view of the thicknesses of the electrode tabs 240 and the connection blocks 340. A welding pole 500 is used to perform a welding operation and is a laser radiator.

The connection blocks 340 are disposed on the substrate 310, and the electrode tabs 240 are electrically connected to the PCM 300 by welding the connection blocks 340 and the electrode tabs 240 to each other. Thus, heat or an impurity generated during the welding operation is rarely introduced into the PCM 300, thereby facilitating the welding operation and reducing defects generated in the battery pack due to the welding operation.

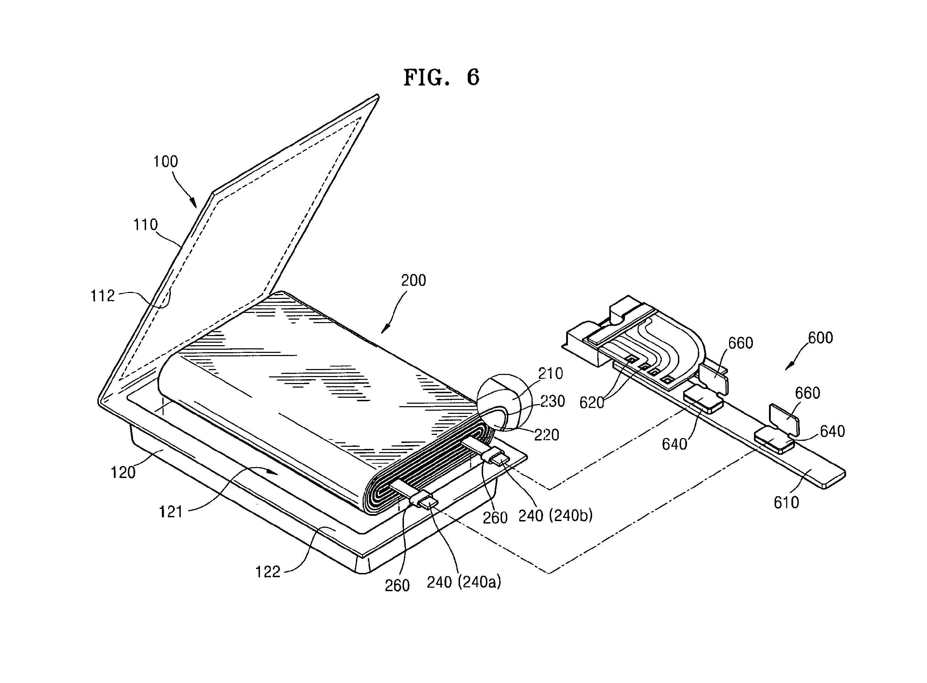

FIG. 6 is a schematic perspective view of an assembling structure of a battery pack according to another embodiment of the present invention. Referring to FIG. 6, the battery pack includes the cover 100, an electrode assembly 200, and a PCM 600. The present embodiment is the same as the first embodiment except that the battery pack further includes connection terminals 660 used to electrically connect the electrode tabs 240 and the PCM 600, in addition to a plurality of connection blocks 640. The difference between the first and second embodiments will now be described for descriptive convenience.

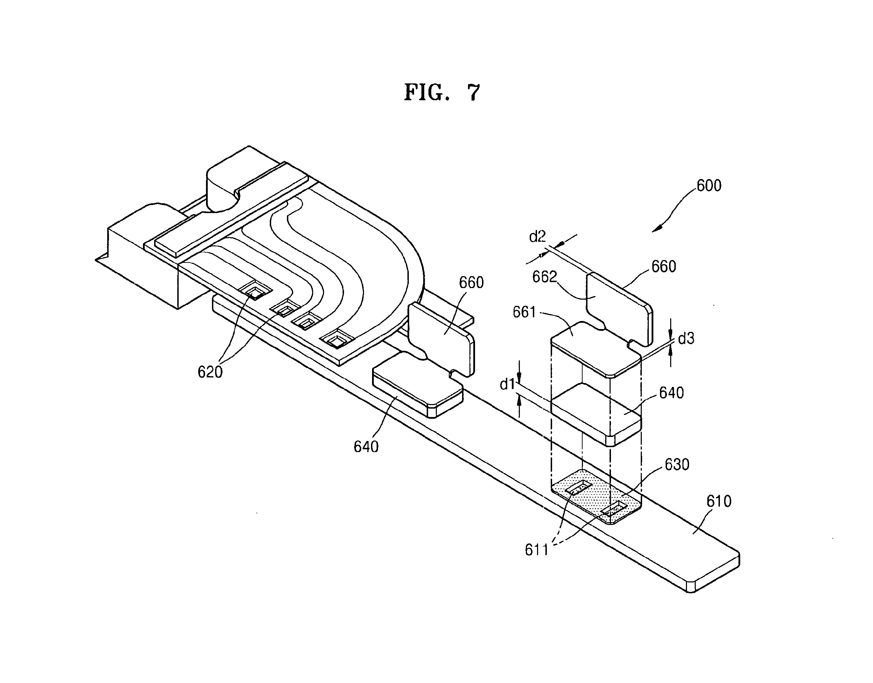

FIG. 7 is a schematic exploded perspective view of an assembling state of the PCM 600, the connection blocks 640, and the connection terminals 660 according to an embodiment of the present invention. The connection terminals 660 include a first terminal portion 661 that has one side surface contacting the connection blocks 640 and a second terminal portion 662 that is bent to form a predetermined angle with the first terminal portion 661. The second terminal portion 662 is bent perpendicularly to the first terminal portion 661 and protrudes in one side direction of a substrate 610.

One side surface of the first terminal portion 661 contacts the connection blocks 640. The first terminal portion 661 and the connection blocks 640 may be welded or adhered to each other in order to reliably maintain contact between the first terminal portion 661 and the connection blocks 640. For example, the first terminal portion 661 and the connection blocks 640 may be coupled to each other by applying a soldering cream to the substrate 610 as the welding material 330 and sintering the connection blocks 640 thereto. Alternatively, a welding method such as resistance welding and laser welding or a double-sided tape may be used to couple the first terminal portion 661 and the connection blocks 640 to each other.

A thickness d2 of the connection terminals 660 may be smaller than the thickness d1 of the connection blocks 640. For example, the thickness d2 of the connection terminals 660 may be about 0.1mm, when the thickness d1 of the connection blocks 640 is about 0.6mm. Although the thickness of the first terminal portion 661 and the thickness of the second terminal portion 662 are equal in FIG. 7, the present invention is not limited thereto. For example, the thicknesses of the first terminal portion 661 and the second terminal portion 662 may be different each other.

Another side surface of the first terminal portion 661 contacts the electrode tabs 240. The connection terminals 660 and the connection blocks 640 are used to electrically connect the electrode tabs 240 and the PCM 600 to each other, and thus are manufactured using an electrically conductive material. For example, at least one of the connection terminals 660 and the connection blocks 640 may be manufactured using a nickel material in view of the (a desired) electrical conductivity.

Although the connection terminals 660 and the connection blocks 640 are coupled to each other in the present embodiment, the present invention is not limited thereto. For example, the connection terminals 660 and the connection block 640 may be integrally manufactured as a single element.

Meanwhile, in the present embodiment, the connection blocks 640 may be electrically connected to protection circuits through grooves 611 formed in the substrate 610. The connection blocks 640 may be partially buried in the PCM 600 as described above.

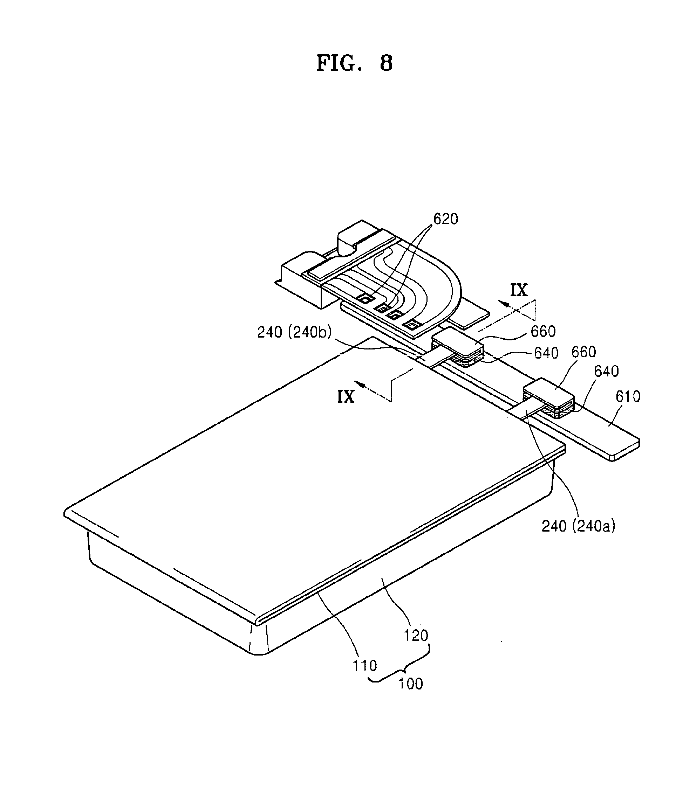

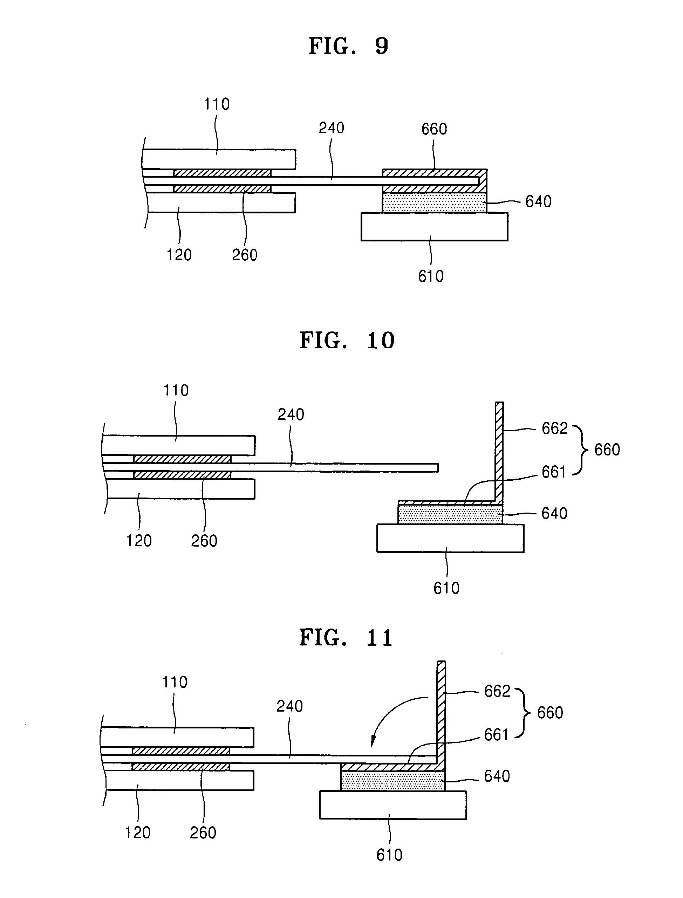

FIG. 8 is a perspective view of the battery pack assembled with the PCM 600. FIG. 9 is a cross-sectional view of the battery pack of FIG. 8 taken along a line IX-IX.

Referring to FIG. 8, the electrode tabs 240 are electrically connected to the PCM 600 using the connection terminals 660 and the connection blocks 640. As shown, the electrode tabs 240 are disposed between the first terminal portion 661 and the second terminal portion 662. That is, if one side surface of the electrode tabs 240 contacts the first terminal portion 661, another side surface of the electrode tabs 240 contacts the second terminal portion 662 by bending the electrode tabs 240.

The electrode tabs 240 are disposed between the first terminal portion 661 and the second terminal portion 662 by bending the second terminal portion 662, thereby securing an electrical connection between the electrode tabs 240 and the PCM 600, and reducing generation of a defect when manufacturing the battery pack. The electrode tabs 240 may be welded to the connection terminal 660.

FIGS. 10 through 12 are cross-sectional views for explaining a process of welding the electrode tabs 240 and the connection terminals 660.

Referring to FIG. 10, the battery cell, the connection blocks 640, and the connection terminals 660 are disposed in the PCM 600. The electrode tabs 240 partially protrude out of the battery cell. The connection blocks 640 and the connection terminals 660 are sequentially stacked on an upper portion of the substrate 610. The connection terminals 660 include the first terminal portion 661 that contacts the connection blocks 640 and the second terminal portion 662 that is perpendicular to the first terminal portion 661. One side surface of the first terminal portion 661 is coupled to the connection blocks 640. The connection blocks 640 are fixed to the substrate 610 using a welding material 630 as shown in FIG. 7.

Referring to FIG. 11, the electrode tabs 240 contact the first terminal portion 661, and the second terminal portion 662 is bent onto the electrode tabs 240 so that the electrode tabs 240 are disposed between the first terminal portion 661 and the second terminal portion 662. That is, the second terminal portion 662 is bent to wrap around the electrode tabs 240. In this regard, the second terminal portion 662 is bent perpendicular to the first terminal portion 661 so that the second terminal portion 662 may wrap around the electrode tabs 240 in the shape of a "⊂".

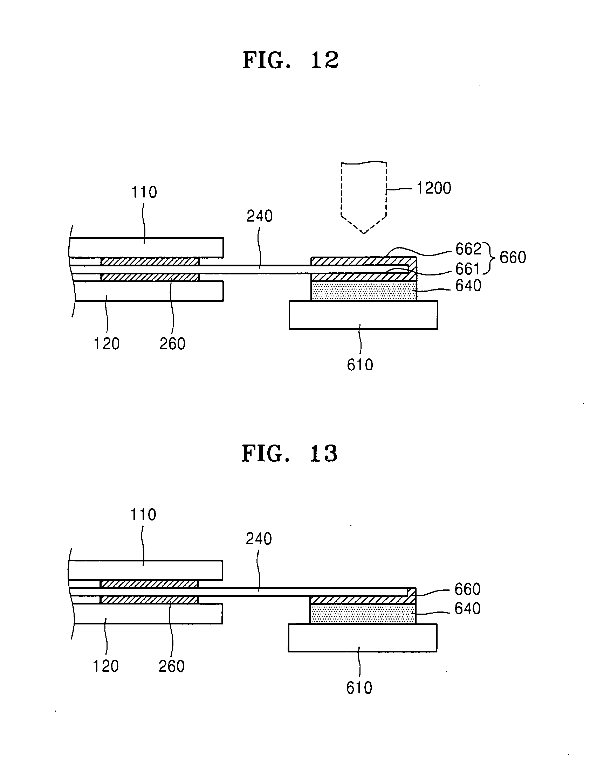

Referring to FIG. 12, the connection terminals 660 and the electrode tabs 240 are fixed to each other by performing a welding operation on the bent second terminal portion 662. A laser welding method may be used in view of the thicknesses of the connection terminal 660 and the electrode taps 240. A welding pole 1200 is used to perform the welding operation and is a laser radiator.

The electrode tabs 240 are disposed between the first terminal portion 661 and the second terminal portion 662 and wrapped by the connection terminals 660, thereby facilitating the welding operation and reliably maintaining the electrical connection between the electrode tabs 240 and the PCM 600.

FIG. 13 is a cross-sectional view of the battery pack of FIG. 9 according to another embodiment of the present invention. Referring to FIG. 13, the second terminal portion 662 does not cover another side surface of the electrode tabs 240 and the connection terminals 660 only contact the side surface thereof. A lower surface and a side surface of the electrode tabs 240 contact the connection terminals 660 by reducing the height of the second terminal portion 662. In this case, the electrode tabs 240 and the connection terminals 660 are fixed to each other by irradiating laser on an upper surface of the electrode tabs 240. Meanwhile, the second terminal portion 662 and the first terminal portion 661 are perpendicular to each other so that the contact surface between the electrode tabs 240 and the connection terminals 660 is increased, thereby increasing the electrical connection between the electrode tabs 240 and the PCM 600.

It should be understood that the embodiments described herein should be considered in a descriptive sense only and not for purposes of limitation. Descriptions of features or aspects within each embodiment should typically be considered as available for other similar features or aspects in other embodiments.

## Claims

1. A battery assembly comprising:
a battery cell;
a protection circuit module (300); and
a connection block (340);
wherein the battery cell comprises an electrode tab (240); and
the electrode tab is electrically coupled to the protection circuit module via the connection block wherein the protection circuit module comprises a substrate (310) and a plurality of protection circuits and the substrate comprises a plurality of grooves (311, 611) on one side surface of the substrate which expose a metal layer of the protection circuits mounted in the substrate and the connection blocks are electrically connected to the protection circuits mounted in the substrate through the grooves.

2. A battery assembly according to Claim 1, wherein the connection block is mounted on the protection circuit module.

3. A battery assembly according to Claim 1 or 2, wherein the connection block has a thickness of from 0.3 mm to 1.2 mm.

4. A battery assembly according to any preceding claim, wherein the electrode tab is welded to the connection block.

5. A battery assembly according to Claim 2 or any claim dependent upon Claim 2, wherein the connection block is partially embedded in the protection circuit module.

6. A battery assembly according to Claim 5, wherein the protection circuit module has a groove (311) and the connection block has a protrusion (341) accommodated in the groove.

7. A battery assembly according to any preceding claim, further comprising a connection terminal (660) that is connected with both the connection block (640) and the electrode tab for electrically coupling the electrode tab with the connection block.

8. A battery assembly according to Claim 7, wherein the thickness of the connection block is greater than the thickness of the connection terminal.

9. A battery assembly according to Claim 7 or 8, wherein the connection terminal comprises a first terminal portion (661) connected with the connection block and a second terminal portion (662) connected with the electrode tab.

10. A battery assembly according to Claim 9, wherein the first terminal portion is substantially perpendicular to the second terminal portion.

11. A battery assembly according to Claim 10, wherein the second terminal portion takes the form of a flange projecting away from the connection block in an edge region thereof.

12. A battery assembly according to Claim 9, wherein the electrode tab comprises first and second surfaces on opposite sides thereof; and wherein the first terminal portion contacts the first surface of the electrode tab, and the second terminal portion contacts the second surface of the electrode tab.

13. A battery assembly according to Claim 12, wherein the connection terminal is bent, so as to be at least partially wrapped around the electrode tab.

14. A battery assembly according to one of Claims 7 to 13, wherein the connection terminal and the connection block are integrally formed.

15. A battery assembly according to one of Claims 7 to 14, wherein at least one of the connection block and the connection terminal is formed from nickel or a material containing nickel.

## Patentansprüche

1. Batterieanordnung, die aufweist:
eine Batteriezelle;
einen Schutzschaltungsmodul (300); und
einen Anschlussblock (340);
wobei die Batteriezelle eine Elektrodenkontaktnase (240) aufweist; und
wobei die Elektrodenkontaktnase elektrisch mit dem Schutzschaltungsmodul mittels des Anschlussblockes verbunden ist, wobei der Schutzschaltungsmodul ein Substrat (310) und eine Vielzahl von Schutzschaltkreisen aufweist, und wobei das Substrat eine Vielzahl von Nuten (311, 611) auf einer Seitenfläche des Substrates aufweist, die eine Metallschicht der Schutzschaltkreise freilegen, die im Substrat montiert sind, und wobei die Anschlussblöcke elektrisch mit den im Substrat montierten Schutzschaltkreisen durch die Nuten verbunden sind.

2. Batterieanordnung nach Anspruch 1, bei der der Anschlussblock am Schutzschaltungsmodul montiert ist.

3. Batterieanordnung nach Anspruch 1 oder 2, bei der der Anschlussblock eine Dicke von 0,3 mm bis 1,2 mm aufweist.

4. Batterieanordnung nach einem der vorhergehenden Ansprüche, bei der die Elektrodenkontaktnase an den Anschlussblock geschweißt wird.

5. Batterieanordnung nach Anspruch 2 oder einem vom Anspruch 2 abhängigen Anspruch, bei der der Anschlussblock teilweise im Schutzschaltungsmodul eingebettet ist.

6. Batterieanordnung nach Anspruch 5, bei der der Schutzschaltungsmodul eine Nut (311) aufweist und der Anschlussblock einen Vorsprung (341) aufweist, der in der Nut aufgenommen wird.

7. Batterieanordnung nach einem der vorhergehenden Ansprüche, die außerdem eine Anschlussklemme (660) aufweist, die mit sowohl dem Anschlussblock (640) als auch der Elektrodenkontaktnase für das elektrische Verbinden der Elektrodenkontaktnase mit dem Anschlussblock verbunden wird.

8. Batterieanordnung nach Anspruch 7, bei der die Dicke des Anschlussblockes größer ist als die Dicke der Anschlussklemme.

9. Batterieanordnung nach Anspruch 7 oder 8, bei der die Anschlussklemme einen ersten Klemmenabschnitt (661), der mit dem Anschlussblock verbunden ist, und einen zweiten Klemmenabschnitt (662) aufweist, der mit der Elektrodenkontaktnase verbunden ist.

10. Batterieanordnung nach Anspruch 9, bei der der erste Klemmenabschnitt im Wesentlichen senkrecht zum zweiten Klemmenabschnitt verläuft.

11. Batterieanordnung nach Anspruch 10, bei der der zweite Klemmenabschnitt die Form eines Flansches annimmt, der vom Anschlussblock weg in einem Randbereich davon vorspringt.

12. Batterieanordnung nach Anspruch 9, bei der die Elektrodenkontaktnase eine erste und eine zweite Fläche auf entgegengesetzten Seiten davon aufweist; und wobei der erste Klemmenabschnitt die erste Fläche der Elektrodenkontaktnase kontaktiert und der zweite Klemmenabschnitt die zweite Fläche der Elektrodenkontaktnase kontaktiert.

13. Batterieanordnung nach Anspruch 12, bei der die Anschlussklemme gebogen ist, damit sie mindestens teilweise um die Elektrodenkontaktnase gewickelt wird.

14. Batterieanordnung nach einem der Ansprüche 7 bis 13, bei der die Anschlussklemme und der Anschlussblock zusammenhängend ausgebildet sind.

15. Batterieanordnung nach einem der Ansprüche 7 bis 14, bei der mindestens eines von Anschlussblock und Anschlussklemme aus Nickel oder einem Material hergestellt wird, das Nickel enthält.

## Revendications

1. Ensemble formant batterie comprenant :
une cellule de batterie ;
un module de circuit de protection (300) ; et
un bloc de connexion (340) ;
dans lequel la cellule de batterie comprend une languette électrode (240) ; et
la languette électrode est électriquement couplée au module de circuit de protection par le biais du bloc de connexion, le module de circuit de protection comprenant un substrat (310) et une pluralité de circuits de protection et le substrat comprenant une pluralité de rainures (311, 611) sur une surface latérale de celui-ci, qui exposent une couche métallique des circuits de protection montés dans le substrat et les blocs de connexion étant raccordés électriquement aux circuits de protection montés dans le substrat par l'intermédiaire des rainures.

2. Ensemble formant batterie selon la revendication 1, dans lequel le bloc de connexion est monté sur le module de circuit de protection.

3. Ensemble formant batterie selon la revendication 1 ou 2, dans lequel le bloc de connexion présente une épaisseur de 0,3 mm à 1,2 mm.

4. Ensemble formant batterie selon l'une quelconque des revendications précédentes, dans lequel la languette électrode est soudée au bloc de connexion.

5. Ensemble formant batterie selon la revendication 2 ou toute revendication dépendant de la revendication 2, dans lequel le bloc de connexion est partiellement incorporé dans le module de circuit de protection.

6. Ensemble formant batterie selon la revendication 5, dans lequel le module de circuit de protection présente une rainure (311) et le bloc de connexion présente une saillie (341) reçue dans la rainure.

7. Ensemble formant batterie selon l'une quelconque des revendications précédentes, comprenant en outre une borne de connexion (660) raccordée à la fois au bloc de connexion (640) et à la languette électrode pour coupler électriquement la languette électrode au bloc de connexion.

8. Ensemble formant batterie selon la revendication 7, dans lequel l'épaisseur du bloc de connexion est supérieure à celle de la borne de connexion.

9. Ensemble formant batterie selon la revendication 7 ou 8, dans lequel la borne de connexion comprend une première partie de borne (661) raccordée au bloc de connexion et une seconde partie de borne (662) raccordée à la languette électrode.

10. Ensemble formant batterie selon la revendication 9, dans lequel la première partie de borne est sensiblement perpendiculaire à la seconde partie de borne.

11. Ensemble formant batterie selon la revendication 10, dans lequel la seconde partie de borne prend la forme d'une bride faisant saillie en s'éloignant du bloc de connexion dans une zone de bord de celui-ci.

12. Ensemble formant batterie selon la revendication 9, dans lequel la languette électrode comprend des première et seconde surfaces sur des faces opposées de celle-ci ; et dans lequel la première partie de borne touche la première surface de la languette électrode et la seconde partie de borne touche la seconde surface de la languette électrode.

13. Ensemble formant batterie selon la revendication 12, dans lequel la borne de connexion est courbée de manière à envelopper au moins partiellement la languette électrode.

14. Ensemble formant batterie selon une des revendications 7 à 13, dans lequel la borne de connexion et le bloc de connexion sont constitués d'un seul tenant.

15. Ensemble formant batterie selon une des revendications 7 à 14, dans lequel au moins l'un parmi le bloc de connexion et la borne de connexion est constitué en nickel ou dans une matière contenant du nickel.
